# EUROPEAN PATENT APPLICATION

(11) **EP 2 190 245 A1**
(43) Date of publication of application: **26.05.2010**
(21) Application number: 08020205.4
(22) Date of filing: 20.11.2008
(51) Int. Cl.: H04W 48/18

(54) **A mobile phone comprising operating means**

(71) Applicant: Koninklijke KPN N.V., 2516 CK The Hague (NL); Nederlandse Organisatie voor Toegepast- Natuurwetenschappelijk Onderzoek TNO, 2628 VK Delft (NL)
(72) Inventor: Broekhuijsen, Betram Jeroen, 9718 RT Groningen (NL); Laarakkers, Jeroen, 2631 WK Nootdorp (NL); Knobbe, Jan-Wiepke, 9745 DA Groningen (NL); Joosten, Hendrikus Johannes Maria, 9861 TJ Grootegast (NL)
(74) Representative: Wuyts, Koenraad Maria

(57) **Abstract**

The invention provides a mobile phone (110) comprising operating means (114). The operating means is arranged to automatically select and activate a connection means out of a first connection means (120) and a second connection means (130). The connection means, when activated connects the mobile phone with a communication network (124; 134) external to the mobile phone. The mobile phone according to the invention thereby considerably facilitates the ease of using multiple connection means and/or communications networks with a single mobile phone.

## Description

The invention relates to a mobile phone comprising: a first connection means and a second connection means arranged for controlling the setting-up of a communication connection between the mobile phone and a first communications network and for controlling the setting-up of a communication connection between the mobile phone and a second communications network, respectively.

The invention also relates to a corresponding removable memory device, method and computer program product.

### BACKGROUND

Mobile phones are increasingly capable of working with different types of communications networks. Consequently, the number of protocols supported by mobile phones continues to increase. A mobile phone may, for example, support wireless protocols such as: GSM, GPRS, UMTS, IMS, LTE, Bluetooth, WiFi, WiMAX, NFC, Infrared Data Association (IrDA), etc. A mobile phone may also support wired protocols, for example: RS232, USB, etc. Some protocols may support general binary data and some may support communication of a particular kind of data, such as voice data.

In the art progress has been made towards arranging a mobile phone with support for two GSM networks. For example, UK Patent Application GB2436015 describes a mobile phone comprising a single Subscriber Identity Module card (SIM card), arranged with multiple subscriber identity sub-modules. The mobile phone further comprises a 'proprietary applications module' (PAM). The PAM can associate the mobile phone with one of the multiple subscriber identity sub-modules. When the mobile phone is associated with a particular one of the multiple subscriber identity sub-modules, the mobile phone can generate outgoing calls and receive incoming calls for a particular network corresponding to that particular subscriber identity sub-module. Each subscriber identity sub-module comprises a different IMSI number, which is associated in the network with a different telephone number. Before making a call, a user can use the PAM to associate the mobile phone with the subscriber identity sub-module of his/her choice, after which he/she can use the mobile phone via the communications network corresponding with the subscriber identity sub-module of his/her choice.

The PAM can be configured to associate the mobile phone with a first subscriber identity sub-module by default and to automatically change the association of the mobile phone to a second subscriber identity sub-module before the mobile phone makes a call. The effect of this is, that the user can be reached under a different telephone number than the number he/she uses for making outgoing calls.

The user may, however, also have valid reasons for wanting to call with two different numbers. For example, in some circumstances use of one of the multiple subscriber identity sub-modules may be cheaper than use of another. The user needs therefore to be conscious of the differences between his/her multiple subscriber identity sub-modules, in order that he/she can make an informed choice between them.

### SUMMARY OF THE INVENTION

It is a problem of the prior art, that as the number of possible communications networks that a mobile phone can operate with increases, it becomes increasingly confusing for a user of the mobile phone to select the correct network for a particular communication demand.

It is an object of the invention to facilitate the ease of using multiple communications networks with a single mobile phone.

This and other objects are achieved by the mobile phone according to the invention. The mobile phone according to the invention comprises a first connection means and a second connection means associated with first operational data and second operational data, respectively, and operating means. The first connection means and the second connection means are arranged for controlling the setting-up of a communication connection between the mobile phone and a first communications network and for controlling the setting-up of a communication connection between the mobile phone and a second communications network, different from the first communications network, respectively, using the first operational data and the second operational data, respectively. The first operational data and the second operational data determine a set of first technical parameters for accessing the first communications network and a set of second technical parameters for accessing the second communications network, respectively. The mobile phone is arranged to request the setting-up of a requested connection by activating the operating means. The operating means is arranged upon being activated, to activate at least one of the first connection means and the second connection means.

When a user needs to establish a connection, he/she has potentially a choice of using the first connection means and the second connection means. Sometimes this choice may be straightforward. For example, if the user whishes to download a data object, e.g., an mp3 song, and the first connection means is for establishing a data connection and the second connection means is for establishing a voice connection, the first connection means should be used. Sometimes, the choice is not so straightforward. For example, if the user wishes to make a telephone call, and if the first connection means and the second connection means are both for setting up a GSM connection, then the user would need to carefully consider which associated communications network is the cheapest, the most reliable or conforms to some policy, etc. The mobile phone has an operating means at its disposal. Instead of making the request directly to one of the first and second connection means, the user directs his/her request for a communication, via the mobile phone, to the operating means. It is the operating means which in turn selects a suitable one of the first and second connection means. If out of the multiple connection means only one can deliver the requested type of communication, the operating means may, for example, select that one. If multiple connection means could deliver the requested type of communication, then the operating means may further select which one is, currently, at this location, the preferred connection means, e.g., the cheapest.

During business hours a user may want to use the first connection means but privately use the second connection means. Or the first connection means may result in lower costs for some applications, say SMS, whereas another is cheaper for voice calls. In short, there may be a myriad of possibilities to consider in order to make an informed choice. Using the invention this task is considerably simplified, as the selection is automatically made by the operating means.

The mobile phone may be embodied in various forms, such as a smart phone or a personal data assistant (PDA) with phone capabilities, etc. The first connection means and the second connection means may be embodied in software and may be executable by a processor comprised in the mobile phone. The first connection means and the second connection means may also be embodied in dedicated hardware, e.g., as a chip, or a gate array, or in a combination of software and hardware. In these embodiments, the first connection means and the second connection means may control the setting-up of a communication connection by actively setting up the connections themselves.

The first connection means and/or the second connection means may also be embodied as a set of parameters, which are read by a particular process, which is possibly wholly or partially executed in software, the particular process being at least partially driven by the parameters. Alternatively, the first connection means and/or the second connection means may control the setting-up of a communication connection by providing another mechanism with instructions, parameters, etc, for setting up the connections. The first connection means and the second connection means may even be identified with the first operational data and second operational data. A technical parameter is, for example, a frequency at which a communications network operates, e.g., broadcasts. As an alternative, the technical parameter may be a data item necessary for authenticating and/or identifying to the communications network, e.g., an identification number, such as an International Mobile Subscriber Identity (IMSI) or a Temporary Mobile Subscriber Identity (TMSI), etc. The operating means may be executed in hardware and/or in software. The operating means may select the first connection means and/or the second connection means on the basis of various conditions, such as price, or ability. Setting-up a connection may involve performing the necessary steps needed for initiating a connection for the communications network in question. A connection is typically a data connection of some kind, such as for binary data or voice data. A connection is typically a bidirectional connection.

It may be advantageous to select both the first connection means and the second connection means. For example, if both the first connection means and the second connection means are capable of a binary data connection, suitable for downloading, then by selecting and activating both the first connection means and the second connection means the downloading capabilities may be combined, and thereby the downloading capacity and/or speed may be increased. If further connection means capable of a binary data connection are availably, they may also be activated.

As a further example, by activating two connections at the same time, a first connection can be used for a basic content subscription and the other connection can be used for premium content. The premium content supplements the basic content in an attractive manner. By splitting over two connections, the premium content can be communicated using a higher security level and/or with higher bandwidth. The premium content can also be billed at a premium price.

The mobile phone may be advantageously equipped with three or more connection means. The operating means may have access to a preferences file, in which a user can list preferences on how the operating means should select the connection means. The preferences file may be stored in any convenient location, e.g., on the mobile phone, on a removable memory card, at an online location, etc.

If one of the operating means, the first connection means and the second connection means is executed in software, then the activating may include any one of: sending a message, executing a process call, sending a signal, raising an interrupt, etc. If both the operating means and the activated communication means are executed in software, then the operating means may activate by forwarding a request, which the operating means has received earlier, to the to be activated connection means.

Note that any one of the first connection means, the second connection means and the operating means may be removable. This supports a modular configuration, which is simpler to upgrade.

It may be advantageous to have the mobile phone arranged with at least one of the first and second connection means accommodated on a removable memory device, e.g., as software stored in a memory of the removable memory device. A removable memory device is typically a smart card, such as a Subscriber Identity Module card (SIM card) or a Universal Integrated Circuit Card (UICC). The UICC typically stores a Universal Subscriber Identity Module (USIM) application.

The removable memory device may also be a memory arranged with a USB connector. The removable memory device may be arranged with a processor for executing the first and/or second connection means, if they are implemented in software. The processor on the removable memory device may control the hardware of the mobile phone, for example, through an Application Programming Interface (API) installed on the mobile phone.

It may be practical to arrange a mobile phone according to the invention with exactly one removable memory device. This saves on manufacture cost, as one interface can be spared. Moreover, it may be unnecessary to have multiple removable memory devices, as the single removable memory device may be created to a specification which provides for enough memory to accommodate all needed connection means. Note that in particular a Universal Integrated Circuit Card (UICC) is especially well suited to be used as the removable memory device, since a UICC has the option to store multiple applications, e.g., the first and second connection means, securely separated from each other. This has the benefit that the two connection means cannot interfere with each other. For example, a programming error in the first connection means would not lead to problems in the second connection means. This also has the benefit of increasing security. A security problem in the first connection means, through which, e.g., authentication data can be maliciously obtained, would not lead to a similar security problem in the second connection means.

In an advantageous embodiment, the operating means is arranged to activate the first connection means or the second connection means, on the basis of a determination which one of the first connection means and the second connection means is capable of delivering the requested connection.

This has the advantage that the user does not need to keep track of what connections he/she has at his/her disposal. Rather, he/she can delegate this task to the operating means. The operating means will then select a connection means from the first and second connection means, suitable for the task at hand.

For example, the operating means may have a stored list that comprises for each available connection means what kind of communication it can establish, for example, whether a connection means can establish a binary data connection, or whether the connection means can establish a voice connection to a telephone number. For example, the list may include both a Voice-over-IP (VoIP) connection and a GSM connection means as a connection means capable of establishing a voice connection to a telephone number. When a user indicates to his/her mobile phone that he/she wishes to make a voice call, then the mobile phone makes this request to the operating means.

The operating means then selects the most preferred one from the multiple connection means for this situation. First, the operating means may select several ones of the connection means that are compatible with the requested connection. Then, from among the selected connections means capable of the requested service the operating means may select the cheapest. Other criteria are also possible. For example, if the user has indicated, e.g., in a preferences file, that he/she wants a high quality of service for his/her voice connections, the operating means may further select the GSM connection, even though a cheaper VoIP connection over WiFi may also be possible.

A connection means may also be temporarily incapable of controlling the setting-up of a communication connection. For example, a WiFi network may not always be available.

In an advantageous embodiment, the mobile phone according to the invention comprises a stored connection destination, which is associated with the first connection means. The operating means is arranged to determine if the requested connection is for the stored connection destination and, if so, to activate the first connection means. For example, the mobile phone may have one or more business telephone numbers stored, and one or more private telephone numbers stored, e.g., in a digital address book. Upon determining that a request is made for a business number, the operating means may select a connection means intended for business calls. This has the benefit that a history can be kept of what calls were business-oriented and what calls were private calls. As a result, the distribution of costs between business and private calls is made automatically, and debiting may automatically proceed, without the need to sort out afterwards which calls were private. Moreover, this has the benefit that a business connection receiving the call sees the correct business number, e.g., via caller id, instead of a private number, when a business call is made.

Typically, the stored connection destination is stored on the mobile phone or on the removable memory device. However, the stored connection destination may also be stored in a storage external to the mobile phone, e.g., in an online address book, stored on an external computer. The mobile phone has access to the online address book via a data connection.

The mobile phone may have stored a further stored connection destination, which is associated with the second connection means. The operating means is further arranged to determine if the requested connection is for the further stored connection destination and, if so, to select and activate from the first or second connection means, the second connection means.

In an advantageous embodiment, the operating means is arranged with a download module for downloading, from an external downloading station, connection software and/or further operational data for controlling of the setting-up of a further communication connection to a further communications network. Downloading connection software may use so-called over the air programming methods (OTA).

The connection software and/or further operational data form new connection means on the mobile phone. This has the advantage that a user may download new connection means if the need arises. For example, before going on a business trip to Spain, the user can download a connection means that gives access to a local GSM network in Spain. Note that a downloaded connection means will typically be implemented in software, and/or be represented by a set of parameters.

In a practical embodiment, the first technical parameter and/or the second technical parameter is for a protocol from a group consisting of WiFi and WiMAX. Also, in the same practical embodiment or a further practical embodiment, the first technical parameter and/or the second technical parameter includes at least one of a username, a password, a MAC address and an authentication key. In general, a technical parameter may be an authorization parameter.

Most communications networks require an authentication procedure before providing access. The operating means can manage the credentials needed for access to such communication networks as well. If use is made of a replaceable memory device, which supports the secure storage and separation of applications, for example, a UICC, then storage of data for access to a communications network, such as authentication data, on the removable memory device is particularly advantageous. In this way, all needed data is stored conveniently in a single place, at the same time preserving its integrity and security.

In a practical embodiment, the operating means is arranged to select among the first connection means and the second connection means for activation based on said request and on a predicted cost of executing the request using said selected connection means.

Selecting a connection means based on the predicted costs is particularly advantageous. Suppose, as an example, that the first connection means can give access to a local Spanish GSM network, with first operational data which is based on a local Spanish subscription, and that the second connection means, although it can also give access to the same physical local GSM network, must do so via a roaming connection, as the second operational data is based on a subscription which is not local to Spain. In this example, it may make a large cost difference which one of the first and second connection means is selected, depending on factors such as: current location (e.g. whether one is in Spain or not) and location of the destination (is the destination number a Spanish number or not). Other factors may also be of importance, for example, is the communication an SMS or a GSM call, is the destination a fixed or mobile number, etc, depending on the precise tariff structure. Note that the same advantage of cost reduction may be achieved if the choice needs to be made between connection means of different types. For example, a WiFi connection may not always be available, but when it is, it would probably be cheaper than a GPRS connection.

In an advantageous embodiment, the operating means is arranged to receive cost parameters from an external source. The predicted cost is determined on the basis of at least the received cost parameters and the request. The cost parameters may be as simple as a number of cents per second, but may also be more complicated, e.g., a table giving a price structure based on multiple destinations. This embodiment has the advantage that the pricing information can be kept up to date, e.g., by regularly downloading new pricing information. Also, when a further connection means has been downloaded, the pricing for its use can, in this way, also be downloaded. The external source may be a server maintaining, e.g., a web page, which is accessed through, e.g., GPRS.

In a practical embodiment, the predicted cost is determined at least on the basis of an indication of a current location of the mobile phone. The current location can be, e.g., received or inferred from the GSM masts that are within range of the mobile phone.

In a practical embodiment, the first connection means and the second connection means are both arranged for controlling the setting-up of communication connections according to a particular protocol. Having multiple choices for the same protocol makes the user more independent from a particular network operator. This has the advantage that the reliability of communications goes up, since a backup connection means is available should a preferred one fail. Moreover, the price of a connection will presumably go down, when it becomes easier for consumers to switch networks. In a practical embodiment, the particular protocol is GSM communication or UMTS communication.

In an advantageous embodiment, the first connection means is arranged to authenticate to the first communications network using a first authentication key comprised in the first operational data, and the mobile phone comprises means to restrict access of the second connection means to the first operational data. Typically, the first connection means will use a first authentication algorithm.

This has the advantage that a network operator, who may otherwise not entrust an authentication key for use with his/her communications network to a card which is shared with a competing network operator, may now safely do so, since there is a means which restricts access to it. The same holds for a communications service provider, i.e. a provider who provides communications services using communications network provided and maintained by a network operator. Authentication keys and authentication algorithms provided by communications service providers may now also be stored safely next to competitors' keys and/or connection means. Even if those connections means comprise software. The means to restrict may, e.g., use separation techniques such as TrustZone on ARM processors. The means to restrict may also employ a second memory which is physically arranged to be only accessible from the first connection means. The means to restrict may also keep the first operation data encrypted using a key which is embedded in the first connection means only.

Note that the second connection means may be arranged to authenticate to the second communications network using a second authentication key comprised in the second operational data using a second cryptographic algorithm, and the means to restrict may advantageously also restrict access of the first connection means to the second operational data.

Having multiple different authentication keys on a single mobile phone, makes it possible to connect the mobile phone with multiple independent communications services that require authentication. When only a single authentication key is stored, the communications service providers must trust each other to the extent that they share a common authentication key. For most practical service providers this is not the case. In particular, two different connection networks will typically use different communications service provider and also different authentication keys.

In an advantageous embodiment, the first authentication key is different from the second authentication key.

In a practical embodiment, the first connection means is arranged for access to an IP Multimedia Subsystem (IMS) and provides access to a multi-media service. The first connection means is arranged to authenticate with the IMS Authentication and Key Agreement protocol (IMS AKA).

In a practical embodiment, the first operational data and the second operational data comprise a first identity number and a second identity number, respectively, to identify a first communication subscription and a second communication subscription, respectively. Typically, a communications network is used by multiple communication service providers, who each may give out subscriptions. This is reflected in the technical parameters that are used for access. As the pricing details for the various subscriptions may vary among different communications service providers, it can be beneficial to be able to access the same communications network via multiple subscriptions.

In an advantageous embodiment, the mobile phone comprises an antenna and a tuner connected to the antenna, arranged to be alternately tunable to a first frequency and a second frequency; and a monitoring device arranged to alternately monitor at the first frequency and at the second frequency for a first identification code and a second identification code, respectively. The mobile phone is arranged to set up a connection, upon receiving the first identification code or the second identification code, through the first communications network or through the second communications network, respectively.

With this embodiment it is possible to be contacted via two different communications networks on a single device via a single antenna. In particular, if the first connection means and the second connection means are both GSM or are both UMTS, the mobile phone is reachable under two different numbers, at the same time.

When the mobile phone is called and a connection is set up, say, via the first connection means, the mobile phone is temporarily not reachable via the second connection means for a further incoming call. In this case a network operator or service provider of the second communications network may redirect the further incoming call to a temporary service, such as a voice mail system, an e-mail storage and forward service, etc.

For a person skilled in the art it is apparent that this embodiment also has considerable merit without the measure of an operating means. Even without an operating means, this embodiment allows a user to be reachable via a mobile phone using two connection means, in particular two GSM or UMTS connection means.

In an advantageous embodiment, the first connection means and second connection means are arranged for setting-up communication connections, each according to a different protocol, and the first connection means and the second connection means are configured to control the setting-up of a connection to a common destination.

For example, the user of a mobile phone may frequently need access to a server at his/her business place, or to his/her desktop at home. For example, he/she may obtain access to business materials, or say, he/she may need to synchronize the calendar in his/her mobile phone with the family calendar at home. Unfortunately, the optimal way of contacting a particular destination may depend on many factors. For example, if the destination is very nearby, Bluetooth may be a good choice. At a slightly further distance a local WiFi network may be optimal. Finally, when neither option is available, a GRPS connection may be set up. For the user, keeping track of all these options is a nuisance. Using the invention, the operating means may perform the selecting, thus increasing the user friendliness of the mobile phone of the invention.

In a practical embodiment, the first connection means and the second connection means are each arranged for any one communication protocol chosen from the group consisting of WiFi, WiMAX, Bluetooth, NFC and GPRS and the common destination is an external data processing device.

The invention also relates to a method of setting up a communication. The method comprises the following steps: sending a communication request to an operating means; selecting a connection means from a first connection means and a second connection means, on the basis of the request; activating the selected connection means; setting up the communication using operational data associated with the selected connection means.

The method according to the invention has the advantage that a user is not tasked with selecting a communications means. A person skilled in the art understands how to adapt the various embodiments of the mobile phone according to the invention to embodiments of the method according to the invention.

The invention also relates to a computer program comprising computer program code means adapted to perform all the steps of a method according to the invention when said program is run on a computer. The computer program may be embodied on a computer readable-medium, such as a memory device, hard disk etc.

It is to be noted that the PAM disclosed in UK Patent application GB2436015 essentially differs from the operating means of the invention. In the invention a request is made to the operating means, whereas the PAM is only operational to change the association of the phone. In particular, upon a request the PAM does not select one of the multiple subscriber identity sub-modules. All outgoing connections are made using the same subscriber identity sub-module which was manually selected earlier by a user.

### BRIEF DESCRIPTION OF THE DRAWINGS

The invention is explained in further detail by way of example and with reference to the accompanying drawings, wherein:
Figure 1 is a block diagram illustrating a system comprising a mobile phone according to the invention and two communications networks.
Figure 2 is a block diagram of a mobile phone according to the invention
Figure 3 illustrates operational data according to the invention.
Figure 4 shows a table 400 listing properties of five connections means, the table being useful for selecting among the five connections means.
Figure 5 is a flow chart illustrating a method according to the invention.

Throughout the Figures, similar or corresponding features are indicated by same reference numerals.

### List of Reference Numerals:

- 100: a system comprising a mobile phone according to the invention and two communications networks.
- 110: a mobile phone
- 112: an input device
- 114: an operating means
- 120: a first connection means
- 122: first operational data
- 124: a first communications network
- 130: a second connection means
- 132: second operational data
- 134: a second communications network
- 140: a connection mechanism
- 200: a mobile phone
- 202: a tuner
- 204: an antenna
- 206: a data processor
- 208: a SIM card connector
- 210: a SIM card
- 212: a bus
- 214: a memory
- 216: a keyboard
- 302: a first embodiment of operational data
- 304: a second embodiment of operational data
- 400: a table
- 402: a column listing for each one of a number of connection means a reference number
- 404: a column listing for each one of a number of connection means the capability of connecting to a telephone number
- 406: a column listing for each one of a number of connection means the capability of providing a high quality of service
- 408: a column listing for each one of a number of connection means the capability to set up a TCP/IP connection to an IP address
- 502: sending a communication request to an operating means
- 504: selecting a connection means from a first connection means and a second connection means, on the basis of the request
- 506: activating the selected connection means
- 508: setting up the communication using operational data associated with the connection means

### DETAILED EMBODIMENTS

While this invention is susceptible of embodiment in many different forms, there is shown in the drawings and will herein be described in detail one or more specific embodiments, with the understanding that the present disclosure is to be considered as exemplary of the principles of the invention and not intended to limit the invention to the specific embodiments shown and described.

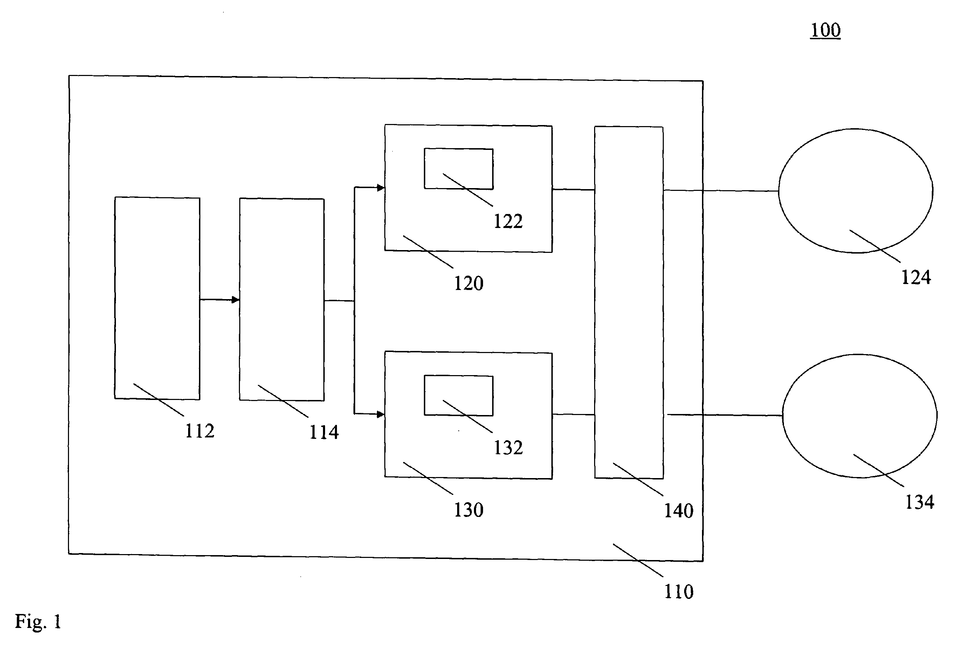

**Figure 1** illustrates a system 100. System 100 comprises a mobile phone 110 and communications networks: a first communications network 124 and a second communications network 134. The number of communications networks, here chosen to be two, is, however, arbitrary.

Mobile phone 110 comprises an input device 112, an operating means 114, a first connection means 120 and a second connection means 130. Note that the number of connection means is here taken to be equal to the number of communications networks, but the number of connections means is, however, also arbitrary. Moreover, a single communications network may correspond to multiple connection means. Likewise, a single connection means may correspond to multiple communication networks. In a simplified setting, however, a single connection means corresponds to exactly one communications network.

Input device 112 is arranged to receive from a user a request for a communications connection. Input device 112 is to this end connected to operating means 114. For example, input device 112 is any one of: a keyboard, a touchpad, a speech recognition system, a user interface, etc. Operating means 114 is connected to first connection means 120 and second connection means 130, for selectively activating first connection means 120 and second connection means 130.

Input device 112 may even be a software program running on a processor, e.g., a web browsing application. The web browsing application can ask operating means 114 for a TCP/IP connection in order to obtain web pages from the Internet. Also an application may autonomously ask for a data connection in order to download periodic updates.

First connection means 120 comprises first operational data 122. Second connection means 130 comprises second operational data 132. Note that it is not necessary that first operational data 122 and second operational data 132 are comprised in first connection means 120 and second connection means 130, respectively, they could also, e.g., be stored in a memory (not shown) which is shared between the mobile phone and first connection means 120 and/or second connection means 130.

Mobile phone 110 further comprises a connection mechanism 140. Connection mechanism 140 is arranged to link the first connection means 120 and second connection means 130 to first communications network 124 and second communications network 134, respectively. Connection mechanism 140 typically comprises an antenna and a tuner (neither shown). Connection mechanism 140 may be accessed through an API, which provides an interface to tuning, receiving and sending functions. First connection means 120 and second connection means 130 are executed in software and actively create a connection using the hardware of connection mechanism 140, by means of the API.

During operation, a user enters a communication request, via input device 112. For example: the user types a telephone number on a keyboard, the user selects, using cursor keys, a number from an address book, the user selects an external computer to establish an ftp connection with, etc. Input device 112 forwards this request to operating means 114 in an appropriate form. Typically, in mobile phone 110 the forwarding of requests between input device 112 and operating means 114 takes place in a pre-determined format.

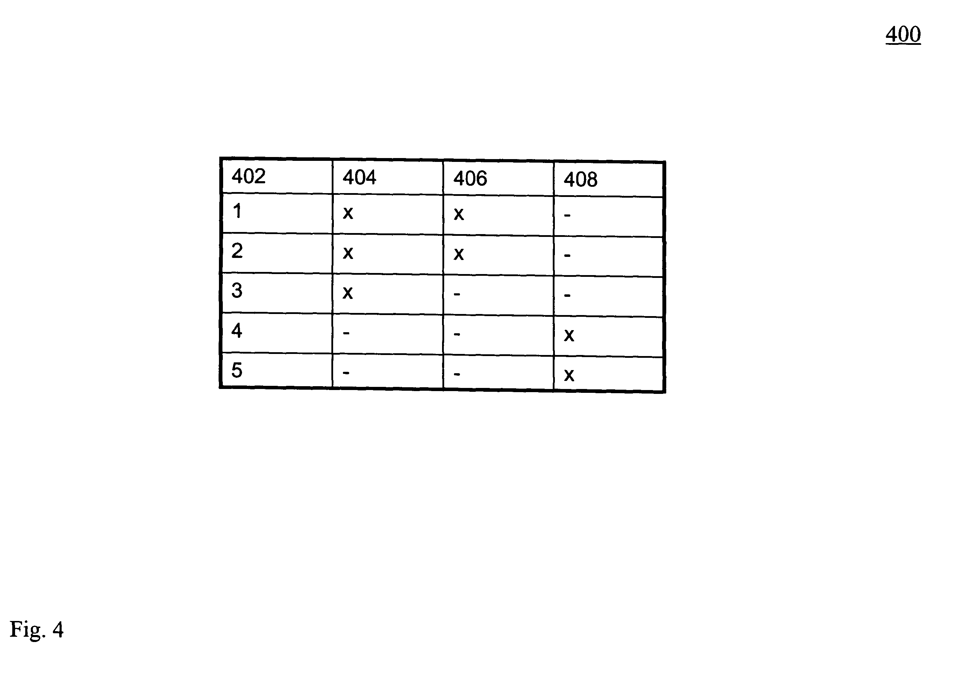

Upon receiving the request, operating means 114 first selects those connection means that are capable of executing the request. Typically, operating means 114 will consult a table, for example, a table such as in Figure 4. The table in Figure 4 is more fully explained in the description of Figure 4 below.

For example, if the user entered a telephone number via input device 112, then operating means 114 will select those connection means that are able to connect to the telephone number. If more than one connection means qualifies, then operating means 114 will select the optimal one according to pre-determined criteria. The criteria may include the cost of executing the request. For example, the table may include for each connection, which is capable of connecting to a telephone number, the number of cents per second that the call would cost, possibly a different number for each one of a number of destination regions. Alternatively, the connection means can be ranked according to suitability with respect to a particular criterion, and the eventual connection means be selected based on weighted ranks. This simplifies the calculations.

After making its final selection, operating means 114 activates one of first connection means 120 and second connection means 130, say, first connection means 120. In this embodiment, operating means 114 sends a message with the details that first connection means 120 needs to set up the connection. First connection means 120 then proceeds with setting up the connection, using connection mechanism 140.

Alternatively, operating means 114 contacts connection mechanism 140 directly, and informs it which one of the connection means 120 and 130 to use. First operational data 122 and/or second operational data 132 may then comprise only, or substantially only, a list of parameters that connection mechanism 140 reads from, to find instructions for setting up the desired connection. Connection mechanism 140 then proceeds with setting up the connection, using, say, first operational data 122 as instructed. For example, first operational data 122 comprises a frequency at which communications network 124 broadcasts. By reading from first operational data 122, connection mechanism 140 obtains this frequency and can tune to this broadcasting frequency appropriately.

In a further improvement, mobile phone 110 comprises a memory (not shown) with an address book. The address book comprises for some destinations an indication which one of the connection means 120 and 130 to use. The address book is typically formatted as a database, comprising a plurality of records. A first record for a first particular telephone number, may list a first GSM connection means as prescribed. A second record, for a second particular telephone number, may list a second GSM connection as prescribed. If operating means 114 determines that a request is for a particular destination that corresponds to a record with a prescribed one of connection means 120 and 130, operating means 114 will select that connection means, without further considering the optimality of using that connection means.

Mobile phone 110 may also comprise a download module (not shown). The download module may connect to an external downloading station (not shown), e.g., using GRPS or WiFi, to download connection software and/or further operational data. The downloaded software and/or further operational data is stored in a memory (not shown) of mobile phone 110. After the download, when operating means 114 is making a selection for a connection means, operating means 114 will also consider the downloaded software and/or further operational data. The downloaded software and/or further operational data may also replace one of the existing connection means, e.g., first connection means 120 and/or first operational data 122.

Operating means 114 may also be arranged to predict the cost of a requested connection. For example, operating means 114 may look up the region of a destination telephone number, in a pricing table. The predicted costs are typically a cost per second. If operating means 114 needs to compare a connection means with per-second-costs with a connection means with fixed per-use-costs, then operating means 114 may also predict the amount of time the connection will be used. For example, operating means 114 may, e.g., predict the total amount of time as the average connection time, e.g., computed on the basis of a logged mobile phone usage, possibly on a per-user basis. To obtain pricing information, operating means 114 may set up a connection with an external source. The external source offers the pricing information in some suitable data structure. Operating means 114 may use GPRS for connecting to the external source. The pricing information may be formatted using a formatting language, such as the Extensible Markup Language (XML)

In an advantageous embodiment, first connection means 120 and second connection means 130 are both arranged to connect to a particular destination, albeit using different connections. For example, first connection means 120 and second connection means 130 are both arranged to connect to a home desktop computer, via WiFi and Bluetooth respectively. When the user notifies operating means 114, via input device 112, that it wishes a connection to the home desktop computer, operating means 114 determines that is has two connections means that are specialized for this destination. Operating means 114 will then choose the optimal one. A connection means that is specialized in a particular destination may also comprise dedicated authentication parameters and/or algorithms, which provide access to the particular destination.

The operating means 114 may also be arranged to maintain a connection to the particular destination, i.e., the home desktop. When operating means 114 determines that the conditions have changed under which the connection means was chosen, the operating means 114 may disconnect or instruct to disconnect one of the currently active connection means, and select and activate a different connection means. For example, if the connection is made using Bluetooth and the distance from the home desktop increases, then Bluetooth will become unreliable and switching to a local WiFi network is better. Also, if the connection is made using GRPS but a WiFi network becomes later available, switching to the WiFi network will lower the usage costs.

To summarize, the invention provides a mobile phone (110) comprising operating means (114). The operating means is arranged to automatically select and activate a connection means out of a first connection means (120) and a second connection means (130). The connection means, when activated connects the mobile phone with a communication network (124; 134) external to the mobile phone. The mobile phone according to the invention thereby considerably facilitates the ease of using multiple connection means and/or communications networks with a single mobile phone.

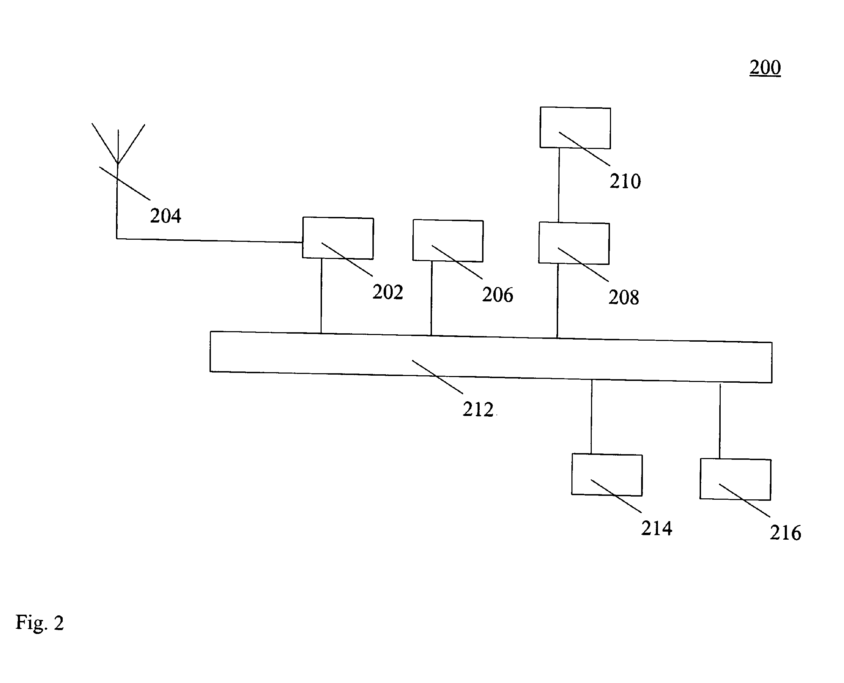

**In** **Figure 2** a mobile phone 200 according to the invention is illustrated which represents a further development of mobile phone 100.

Mobile phone 200 comprises a tuner 202 and an antenna 204. The antenna 204 is connected to, and under control of, tuner 202. Mobile phone 200 further comprises a data processor 206, a SIM card connector 208, a memory 214 and a keyboard 216. Mobile phone 200 is provided with a bus 212, to which are connected at least: tuner 202, data processor 206, SIM card 210, memory 214 and keyboard 216. Bus 212 interconnects the components connected to bus 212. The SIM card connector 208 is provided with a SIM card 210.

Note that in a preferred embodiment, SIM card connector 208 is replaced with a UICC card connector, and SIM card 210 with a UICC card.

Mobile phone 200 also uses an operating means, similar to operating means 114, however it is implemented in software, and stored in memory 214. Also, first connection means 120 and second connection means 130 are implemented in software, and are stored on SIM card 210. Also, first operational data 122 and second operational data 132 are stored on SIM card 210. SIM card 210 typically is a removable memory device. Mobile phone 200 also comprises a connection mechanism 140, comprising, e.g., at least antenna 204, tuner 202 and part of data processor 206.

SIM card 210 comprises the operational data for a first and a second GSM subscription. Each GSM subscription has its own broadcast frequency, IMSI number, authentication key and authentication algorithm. Typically a GSM subscription is also assigned a TMSI number.

Upon activation, mobile phone 200 announces itself to the GSM communications networks that correspond to the GSM subscriptions. Mobile phone 200 sends a data packet for each GSM subscription on a suitable frequency containing the IMSI or TMSI number. Mobile phone 200 will be asked by the GSM communications networks to authenticate itself using a cryptographic challenge response algorithm. A challenge received by mobile phone 200 is routed to software with access to the corresponding authentication key and algorithm, typically, to a connection means. In one embodiment, mobile phone 200 uses an IMSI number embedded in the challenge to route the challenge to the correct connection means, i.e., the GSM subscription that corresponds to that IMSI.

During operations, the user makes a request for a connection using keyboard 216. Thereupon, data processor 206 will execute software of the operating means 114. This software selects which connection means must be activated, and then transfers control to connection mechanism software stored in memory 214. The connection mechanism software instructs SIM card 210 to send to the connection mechanism software, via SIM card connector 208 and bus 212, the first parameters of the first GSM subscription or the second GSM subscription, tunes tuner 202 to the correct frequency and starts a connection as is otherwise usual in the art.

While the mobile phone 200 is not processing a call, mobile phone 200 is waiting for the user to request a connection, through keyboard 216, and waiting for an incoming call via antenna 204.

Mobile phone 200 is capable of receiving calls for all GSM subscriptions as follows: First mobile phone 200 authenticates itself for all GSM subscriptions by engaging in an authentication protocol for each GSM subscriptions in turn. For each GSM subscription a broadcast frequency is obtained. For example, the broadcast frequency may be obtained from the GSM network after initial access to the network. Also the broadcast frequency may be obtained from a stored location on mobile phone 200. If two GSM subscriptions correspond to the same physical network, they may have the same broadcast frequency; if two GSM subscriptions do not correspond to the same physical network they will have a different broadcast frequency.

Data processor 206 tunes tuner 202 to the broadcast frequency of a GSM subscription. While tuner 202 is tuned to the first broadcast frequency, mobile phone 200 can receive messages sent over the first broadcast frequency coming from a first GSM network used by the first GSM subscription. If tuner 202 receives, via antenna 204, an incoming call connection request for an IMSI or TMSI number, data processor 206 verifies if the IMSI or TMSI number corresponds to the first GSM subscription. If so, data processor 206 sets up an incoming call connection for the first GSM subscription, as is usual in the art. Mobile phone 200 will, to use the incoming call connection, tune to a new frequency assigned by the first GSM network. Over the new frequency voice data for the incoming call is exchanged.

If no incoming call connection was made while mobile phone 200 was tuned to the broadcast frequency of the first GSM subscription, then after some time, e.g., after 5 seconds, data processor 206 tunes tuner 202 to the broadcast frequency of a second GSM subscription. When tuner 202 receives, via antenna 204, incoming call connection request for an IMSI or TMSI number, data processor 206 verifies if the IMSI or TMSI number corresponds to the second GSM subscription. If so, data processor 206 sets up an incoming call connection for the second GSM subscription.

If no incoming call connection was made while mobile phone 200 was tuned to the broadcast frequency of the second GSM subscription either, mobile phone 200 will tune to a next broadcast frequency corresponding to a next GSM subscription. The mobile phone continues in this way until all the broadcast frequencies of all the GSM subscription have been tried. If still no incoming call connection has been established, mobile phone 200 tries again with the first GSM subscription, as described above.

For example, if mobile phone 200 uses two GSM subscriptions: a first and a second GSM subscription, then data processor 206 tunes tuner 202 alternately to the broadcast frequency of the first and second subscription, until an incoming call request for a recognized IMSI or TMSI is received.

Note that to receive incoming calls for multiple GSM subscriptions, operating means 114 is not necessary. A user could even make calls without operating means 114 as long as the user selects him/herself through which connection means the call should be made.

When a communications service provider wishes to connect to mobile phone 200, the communications service provider broadcasts and repeats signaling messages, e.g. an incoming call request, containing the IMSI or TMSI number over a broadcast frequency. If tuner 202 is tuned into the broadcast frequency of the communications network used by the communications service provider, the tuner can receive these signaling messages, and mobile phone 200 can proceed with setting up the incoming call. The time tuner 202 remains tuned to a particular broadcast frequency should be longer than the time a single signaling message is broadcasted. Preferably tuner 202 remains tuned to the broadcast frequency at least twice that time; provided that tuner 202 has sufficient reception, this will guarantee that the tuner will receive the broadcasted signaling messages for the IMSI or TMSI number at least once.

The time it takes to complete one cycle, i.e., to tune into the broadcast frequencies of all GSM subscriptions in turn, should be less than the total time a GSM broadcaster repeats the broadcasting of a single signaling message. Preferably, the time it takes to complete one cycle, should be less than half the total time a GSM broadcaster repeats the broadcasting of a signaling message for an IMSI or TMSI.

Note that after a connection is set up between mobile phone 200 and a GSM communication network, the communications will typically go over a different frequency than the broadcast frequency. When the connection is dropped, the mobile phone 200 will again start to alternately tune into the broadcast frequencies of all GSM subscriptions in turn.

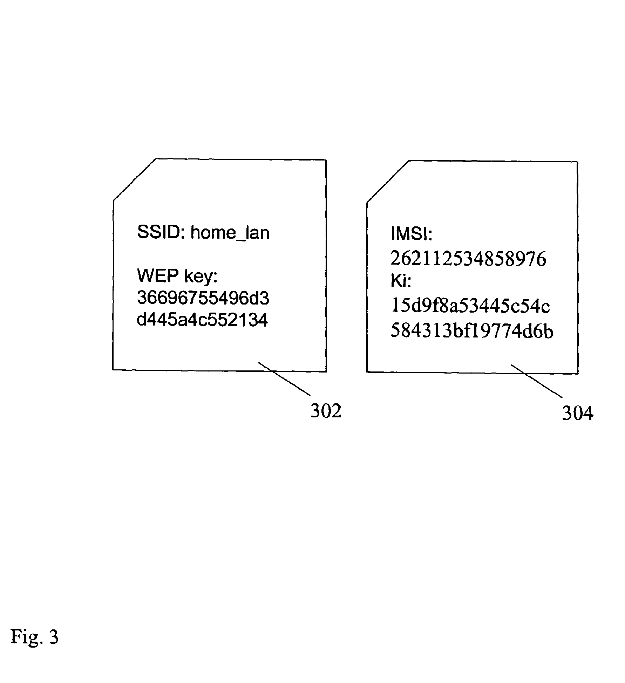

**Figure 3** illustrates a first embodiment of operational data 302 and a second embodiment of operational data 304. Both first operational data 122 and second operational data 132 can comprise any one of first embodiment of operational data 302 and second embodiment of operational data 304.

First embodiment of operational data 302 gives information needed to connect to a WiFi hotspot. This WiFi hotspot has a Service Set Identifier (SSID): 'home_lan'. This hotspot is protected using Wired Equivalency Privacy (WEP). The WEP key is: 36696755496d3d445a4c552134. Connection mechanism 140 may use this information to connect to this particular WiFi hotspot in a manner known in the art.

Second embodiment of operational data 304 gives information needed to connect to a GSM network. First the International Mobile Subscriber Identity (IMSI) is given: 262112534858976. Next, the authentication key is given (Ki): 15d9f8a53445c54c584313bf19774d6b.

Note that additional information may be necessary to connect to a particular network.

**Figure 4** shows a table 400 that operating means 114 may use to select among, in this case, five connections means.

Each row of table 400 corresponds to a particular connection means. Rows 1, 2, 3, 4, and 5 under the header-row correspond to connection means 1, 2, 3, 4 and 5, respectively. Column 402 gives a reference number of the connection means. In Figure 4, the reference numbers are sequential integers, but they may, e.g., also be memory addresses where software may be found for the connections means corresponding to that row.

Connection means 1 and 2 are GSM connection means. Connection means 3 is a VoIP connection means. Connection means 4 is a Bluetooth connection means. Connection means 5 is a GPRS connection means.

Column 404 indicates whether the connections means is capable of connecting to a telephone number for a voice call. Connections means 1, 2 and 3 are indicated as being able to do so. Column 406 indicates whether the connection means is capable of providing a high quality of service for the connection. Here the VoIP connection means, i.e., connection means 3, is indicated as not providing a high quality. Note that this may be different for other VoIP connections. Connection means 1 and 2 are indicated as providing a high quality of service.

Column 408 indicates whether the connection means is able to set up a TCP/IP connection to an IP address. In this case, connection means 4, i.e., the Bluetooth connection means, can provide, so-called, TCP/IP over Bluetooth. Also, connection means 5 is indicated as being able to set up a TCP/IP connection.

Note that table 400 may contain many other types of properties and may contain operational details which are needed to access the connection means and to set up connections. Table 400 may also comprise pricing information. These additional data can be supplied by a person skilled in the art.

Suppose, operating means 114 needs a connection means which is capable of connecting to a telephone number for a voice call. From the table operating means 114 can select connection means 1, 2 and 3, as they are indicated as having this connection capability. If the user has further indicated that he/she prefers low costs to high quality of service, operating means 114 will select connection means 3 as it will typically be the cheapest from these three connection means. Note that connection costs are not shown in table 400.

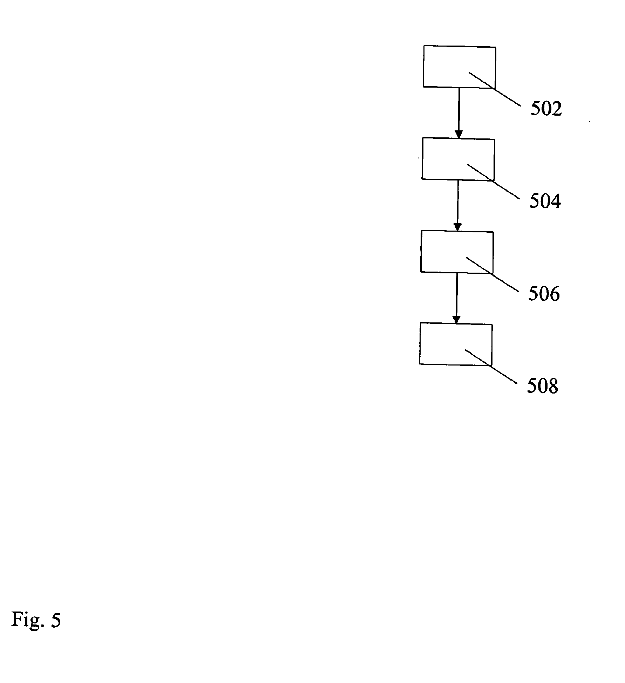

**Figure 5** is a flow chart, which illustrates a method according to the invention. The method comprises the following steps: sending a communication request to an operating means 502; selecting a connection means from a first connection means and a second connection means, on the basis of the request 504; activating the selected connection means 506; setting up the communication using operational data associated with the connection means 508.

The order of the steps may be varied, and other steps may be interposed. Typically, the method will be embodied in computer program code, e.g., using a language such as C or assembly. The program code can be executed in a processor comprised in, e.g.: mobile phone 110, data processor 206, or SIM card 210 or a UICC. The program code can be stored in any suitable computer readable medium, such as a memory, a magnetic storage, etc. The program code may also be transmitted, e.g., over the Internet. The method may also be executed using dedicated hardware.

## Claims

1. A mobile phone (110) comprising:
a first connection means (120) and a second connection means (130) associated with first operational data (122) and second operational data (132), respectively, and operating means (114);
wherein:
the first connection means and the second connection means are arranged for controlling the setting-up of a communication connection between the mobile phone and a first communications network (124) and for controlling the setting-up of a communication connection between the mobile phone and a second communications network (134), different from the first communications network, respectively, using the first operational data and the second operational data, respectively;
the first operational data and the second operational data determining a first technical parameter for accessing the first communications network and a second technical parameter for accessing the second communications network, respectively;
the mobile phone is arranged to request the setting-up of a requested connection by activating the operating means;
the operating means is arranged upon being activated, to select and activate at least one of the first connection means and the second connection means.

2. A mobile phone as in claim 1, wherein the operating means is arranged to activate the first connection means or the second connection means, on the basis of a determination which one of the first connection means or the second connection means is capable of delivering the requested connection.

3. A mobile phone as in claim 1 or 2 comprising a stored connection destination associated with the first connection means, and wherein the operating means is arranged to determine if the requested connection is for the stored connection destination and, if so, to activate the first connection means.

4. A mobile phone as in any one of the preceding claims wherein the operating means is arranged with a download module for downloading, from an external downloading station, connection software and/or further operational data for controlling of the setting-up of a further communication connection to a further communications network.

5. A mobile phone as in any one of the preceding claims wherein the first technical parameter is for a protocol from a group consisting of WiFi and WiMAX, and
wherein the first technical parameter includes at least one of a username, a password, a MAC address and an authentication key.

6. A mobile phone as in any one of the preceding claims, wherein the operating means is arranged to select among the first connection means and the second connection means for activation based on said request and on a predicted cost of executing the request using said selected connection means.

7. A mobile phone as in claim 6, wherein the operating means is arranged to receive cost parameters from an external source;
and wherein the predicted cost is predicted on the basis of at least the received cost parameters and the request.

8. A mobile phone as in claim 6 or 7 wherein the predicted costs is predicted at least on the basis of an indication of a current location of the mobile phone.

9. A mobile phone as in any one of the preceding claims wherein the first connection means is arranged to authenticate to the first communications network using a first authentication key comprised in the first operational data, **characterized in that** the mobile phone comprises means to restrict access of the second connection means to the first operational data.

10. A mobile phone as in Claim 9, wherein the first connection means is arranged for access to a IP Multimedia Subsystem and provides access to a multi-media service, and wherein the first connection means is arranged to authenticate with the Authentication and Key Agreement protocol.

11. A mobile phone as in any one of the preceding claims, wherein the first operational data and the second operational data comprise a first identity number and a second identity number, respectively, to identify a first communication subscription and a second communication subscription, respectively.

12. A mobile phone as in any one of the preceding claims, wherein the mobile phone comprises
an antenna and a tuner connected to the antenna, arranged to be alternately tunable to a first frequency and a second frequency;
and a monitoring device arranged to alternately monitor at the first frequency and at the second frequency for a first identification code and a second identification code, respectively;
wherein the mobile phone is arranged to set up a connection, upon receiving the first identification code or the second identification code, through the first communications network or through the second communications network, respectively.

13. A mobile phone as in any one of the preceding claims, wherein the first connection means and the second connection means are both arranged for controlling the setting-up of communication connections according to a particular protocol

14. A mobile phone as in claim 13, wherein the particular protocol is GSM communication or UMTS communication.

15. A mobile phone as in any one of claims 1 to 12, wherein the first connection means and second connection means are arranged for setting-up communication connections, each according to a different protocol, and wherein the first connection means and second connection means are configurable to control the setting-up of a connection to a common destination.

16. A mobile phone as in claim 15 wherein the first connection means and the second connection means are each arranged for any one communication protocol chosen from the group consisting of WiFi, WiMAX, Bluetooth, NFC and GPRS and
wherein the common destination is an external data processing device.

17. A mobile phone as in any one of the previous claims wherein the operating means is comprised in a removable memory device (210).

18. A removable memory device as in claim 17.

19. A method of setting up a communication comprising:
sending a communication request to an operating means (502);
selecting a connection means from a first connection means and a second connection means, on the basis of the request (504);
activating the selected connection means (506); and
setting up the communication using operational data associated with the connection means (508).

20. A computer program comprising computer program code means adapted to perform all the steps of claim 19 when the computer program is run on a computer.
